# EUROPÄISCHE PATENTSCHRIFT

(11) **EP 2 150 716 B1**
(45) Veröffentlichungstag und Bekanntmachung des Hinweises auf die Patenterteilung: **09.11.2011**
(21) Anmeldenummer: 08773977.7
(22) Anmeldetag: 12.07.2008
(51) Int. Cl.: F16D 15/00, F16D 41/08

(54) **WELLENSCHALTER**
SHAFT SWITCH
EMBRAYAGE

(30) Priorität: 26.07.2007 DE 102007035450
(43) Veröffentlichungstag der Anmeldung: 10.02.2010
(73) Patentinhaber: Voith Patent GmbH, 89522 Heidenheim (DE)
(72) Erfinder: KÖRNER, Tilmann, 89551 Königsbronn (DE); JAHN, Volker, 73655 Plüderhausen (DE); FRENZ, Hartmut, 74542 Braunsbach (DE)
(74) Vertreter: Dr. Weitzel & Partner
(86) Internationale Anmeldenummer: PCT/EP2008/005716
(87) Internationale Veröffentlichungsnummer: WO 2009/012905

(56) Entgegenhaltungen:
- EP-A- 1 481 873
- WO-A-89/03941
- DE-A1- 10 158 608
- US-A- 5 653 320
- US-A1- 2006 191 762

## Beschreibung

Die Erfindung betrifft einen Wellenschalter zur drehfesten Verkoppelung zweier in axialer Richtung hintereinander angeordneter Wellen.

Wellenschalter sind bekannt. Sie umfassen einen zylinderförmigen oder konisch verjüngten Außenring und einen Innenring mit einer in Axialrichtung sich konisch verjüngenden radial äußeren Oberfläche, die einen radial zumindest im Wesentlichen kreisförmigen Querschnitt aufweist. Zwischen dem Innenring und dem Außenring sind zylinderförmige Rollen angeordnet oder kegelförmige Rollen derart angeordnet, dass die Konizität der Rollen und der Oberfläche des Innenrings in Axialrichtung entgegengesetzt verläuft. Derartige Wellenschalter werden zum Beispiel bei einer Momentenumkehr im Getriebe eines Kraftfahrzeugs mit einem Retarder bei Retarderbetrieb genutzt.

Der Außenring ist mit einer ersten Welle drehfest üblicherweise verschraubt oder aufgesteckt und der Innenring ist mit einer zweiten Welle drehfest üblicherweise verschraubt oder aufgesteckt. Die beiden Wellen sind derart in axialer Richtung hintereinander angeordnet, dass der Außenring den Innenring umfassen kann bzw. zumindest teilweise umfasst. Der Innenring kann dadurch im Außenring frei drehen, so dass im Wesentlichen kein Drehmoment von einer auf die andere Welle übertragen wird, das heißt ein Freilauf besteht.

Um den Wellenschalter zu schalten, das heißt um vom freien Drehen des Innenrings im Außenring zu einer Drehmomentübertragung von einer auf die andere Welle umzuschalten, wird, durch axiales Verschieben mindestens einer der Wellen in Richtung der anderen Welle, der Innenring in den Außenring derart eingedrückt, dass die Rollen zwischen den Ringen zusammengepresst werden.

Der Reibungswiderstand der Rollen am Innen- und Außenring wird dadurch so weit vergrößert, dass vom Freilauf zu einer in beide Drehrichtungen der Wellen im Wesentlichen starren Verbindung der Wellen übergegangen wird. Derartige Wellenschalter werden auch als selbstverstärkende kraftschlüssige Wellenschalter bezeichnet.

Ein Beispiel eines derartigen Wellenschalters ist in der DE 101 58 608 A1 offenbart. Dabei ist die Innenoberfläche des Außenrings im Radialschnitt als Polygon ausgebildet. Die Rollen positionieren sich dabei, beim Umschalten vom Freilauf in eine im Wesentlichen verdrehungsstabile starre Verbindung, an den Positionen der Ecken des Polygons, wodurch die starre Verbindung eine verbesserte Radialsymmetrie aufweist. Die Anzahl der Positionen, in denen die Rollen sich beim Umschalten positionieren können, ist dabei durch die Geometrie des Polygonzuges, d.h. die Anzahl der Ecken des Polygons, festgelegt. Es kann daher zwischen den Rollen ein erhebliches Radialspiel auftreten, was die Eigenschaften des Freilaufs verschlechtern kann und auch das Verhalten des Wellenschalters beim Umschalten beeinträchtigen kann.

Um dieses Radialspiel der Rollen zu begrenzen, schlägt die DE 101 58 608 A1 vor, die Rollen, ähnlich wie bei einem Kugellager, in einem Käfig zu halten, wodurch der Aufbau des Wellenschalters verkompliziert wird. Auch die Herstellung eines Außenrings mit polygonaler Innenform ist relativ aufwendig, da für die Ausformung einer derartigen Form nicht die gleichen Maschinen wie für die Herstellung von Verzahnungen verwendet werden können.

Das Dokument EP 1 481 873 A beschreibt einen Wellenschalter mit den im Oberbegriff von Anspruch 1 genannten Merkmalen. Ferner sind Vertiefungen vorgesehen, in welchem Rollen laufen.

Zum weiteren Stand der Technik wird auf die folgenden Druckschriften verwiesen:
WO 89/03941 A
US 2006/191762 A1
DE 101 58 608 A1.

Der Erfindung liegt die Aufgabe zugrunde, einen Wellenschalter bereitzustellen, welcher die Nachteile des Standes der Technik vermeidet, insbesondere wobei eine radiale Fixierung der Rollen auf einfache Weise erreicht werden soll.

Diese Aufgabe wird durch den Wellenschalter nach dem unabhängigen Anspruch gelöst. Die abhängigen Ansprüche stellen bevorzugte Ausführungsformen der Erfindung dar.

Ein erfindungsgemäßer Wellenschalter ist zur drehfesten Verkoppelung zweier in axialer Richtung hintereinander angeordneter Wellen verwendbar. Der erfindungsgemäße Wellenschalter weist einen zumindest im Wesentlichen zylinderförmigen Außenring und einen Innenring mit einer in Axialrichtung sich konisch verjüngenden radial äußeren Oberfläche, die einen radial zumindest im Wesentlichen kreisförmigem Querschnitt aufweist, auf. Zwischen dem Innenring und dem Außenring sind kegelförmige Rollen derart angeordnet, dass die Konizität der Rollen und der Oberfläche des Innenrings in Axialrichtung entgegengesetzt verläuft.

Erfindungsgemäß weist der Außenring eine Innenverzahnung auf, wobei die Rollen bevorzugt einzeln zwischen jeweils zwei benachbarten Zähnen der Innenverzahnung angeordnet sind. Dadurch wird auf einfache Weise das Radialspiel der Rollen entsprechend dem Spiel der Rollen in den Zwischenräumen zwischen den Zähnen der Verzahnung eingegrenzt. Die Rollen sind zu jeder Zeit radialsymmetrisch um die Axialrichtung verteilt. Ein Außenring mit Innenverzahnung ist sehr einfach und kostengünstig herstellbar. Eine Fixierung der Rollen mittels eines Käfigs wird nicht mehr benötigt.

Die Bezeichnung Zylinderform des Außenrings ist dabei so zu verstehen, dass die radial innere Oberfläche des Außenrings abgesehen von der von dieser vorstehenden Zähne der Innenverzahnung in ihrem Verlauf zylinderförmig ist. Selbstverständlich ist es auch möglich, auch die radial äußere Oberfläche des Außenrings, gegebenenfalls wiederum abgesehen von einer hierauf aufgesetzten Verzahnung, zylinderförmig zu gestalten. Die genannte Zylinderform der radial inneren Oberfläche des Außenrings sollte zumindest im axialen Bereich, in welchem die Rollen positioniert sind, vorgesehen sein.

Besonders vorteilhaft ist jedoch der gesamte Außenring zylinderförmig gestaltet, mit einer zusätzlich vorgesehenen Innenverzahnung und/oder Außenverzahnung auf den zylindrischen Oberflächen.

Wenn die Innenverzahnung des Außenrings als Evolventenverzahnung ausgeführt ist liegen die Rollen besonders gut an den Flanken der Zähne der Verzahnung an.

Bei einer Evolventenverzahnung sind die Spitzen der Zähne und die Täler zwischen den Zähnen abgerundet ausgeführt. Dadurch wird ein sattes Anliegen der Rollen im Außenring erreicht.

Vorteilhaft weist der Außenring eine Außenverzahnung auf, so dass der Außenring zum Beispiel in einem Getriebe zur Drehmomentübertragung auf andere Getriebeteile verwendet werden kann. Es kann so eine sehr kurze axiale Baulänge verwirklicht werden. Die Innen- und Außenverzahnung des Außenrings kann auf einfache Weise an einer einzigen Maschine hergestellt werden.

Während sich bei einer erfindungsgemäßen Innenverzahnung in Evolventenform, die in Axialrichtung des Wellenschalters äquidistant zur Drehachse ausgeführt ist, die Rollen aufgrund ihrer Konizität gegenüber der Drehachse des Wellenschalters schräg stellen, können gemäß einer anderen Ausführungsform gemäß der Erfindung die Zähne der Innenverzahnung des Außenrings derart an die Kegelform der Rollen angepasst sein, dass die Zähne in Axialrichtung eine zur Konizität der Rollen entgegengesetzte Verjüngung aufweisen. Die Rollen liegen dadurch auf ihrer gesamten axialen Länge an den Flanken der Zähne der Innenverzahnung des Außenrings an, bei nur geringer oder ohne Schrägstellung gegenüber der Drehachse des Wellenschalters.

An einem erfindungsgemäßen Wellenschalter können Abstützmittel zur stirnseitigen und/oder radial inneren Abstützung der Rollen vorgesehen sein, wodurch die Montage des Wellenschalters erleichtert wird und eine sichere Positionierung der Rollen des Wellenschalters gewährleistet werden kann.

Bevorzugt umfassen die Abstützmittel einen Deckring, wobei an dem Deckring in Axialrichtung vorstehende Zapfen angeordnet sind, derart, dass jeweils zwei benachbarte Zapfen die Rollen durch Ausbilden von zwei Auflagepunkten radial nach innen abstützen. Ein derartiger Deckring ist einfach herstellbar und kann einfach in Axialrichtung neben dem Außenring befestigt werden, derart, dass die Zapfen seitlich in Richtung des Außenrings axial vom Deckring abstehen. Ein derartiger Deckring kann bevorzugt in Axialrichtung an der Seite am Außenring angeordnet sein, zu welcher sich die Rollen konisch erweitern. Selbstverständlich kann auch an beiden axialen Seiten des Außenrings ein Deckring vorgesehen werden. Es wird so eine besonders einfache Montage des erfindungsgemäßen Wellenschalters ermöglicht.

Wenn der Deckring zumindest teilweise aus Kunststoff gefertigt ist kann der Deckring zusätzlich die Funktion eines Kunststofflagers mit einer Dämpfung haben.

Die Erfindung soll nachfolgend anhand von Ausführungsbeispielen und den beigefügten Figuren exemplarisch erläutert werden.

Es zeigen:
- Figur 1: einen Axialschnitt durch einen erfindungsgemäßen Wellenschalter;
- Figur 2: eine bevorzugte Ausführungsform des Außenrings eines erfindungsgemäßen Wellenschalters;
- Figur 3a: einen Ausschnitt eines Deckrings als Abstützmittel der Rollen eines erfindungsgemäßen Wellenschalters;
- Figur 3b: die Positionierung der Rollen in Zwischenräumen der Zähne des Außenrings gemäß Figur 2 mit einer Abstützung durch die Abstützmittel gemäß Figur 3a in einem Ausschnitt;

Die Figuren zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

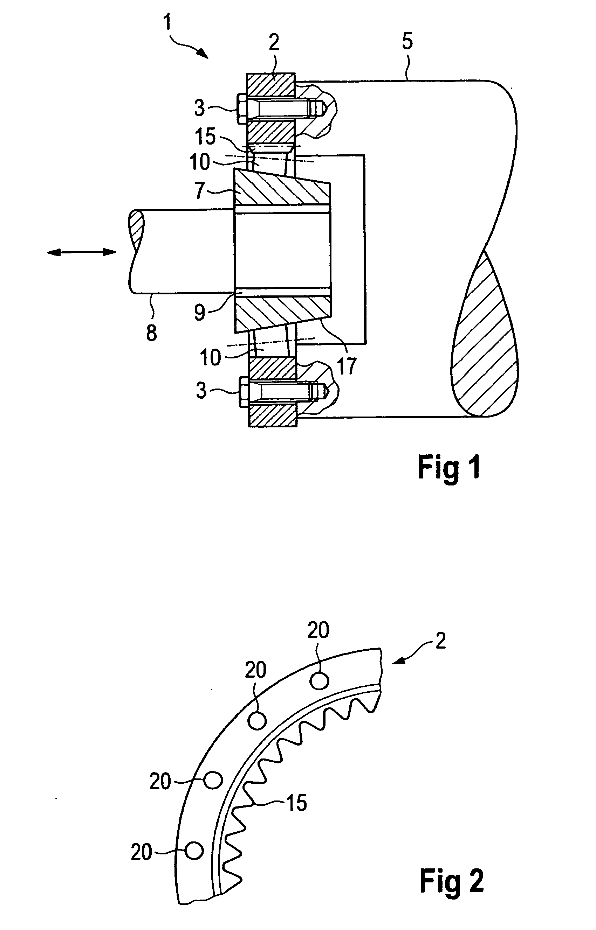

In der Figur 1 ist ein Axialschnitt durch einen erfindungsgemäßen Wellenschalter 1 gezeigt. Der Außenring 2 des Wellenschalters 1 ist mittels Schrauben 3 an die Stirnseite einer ersten Welle 5 drehfest angeschraubt. Der Innenring 7 des Wellenschalters 1 ist auf ein Ende einer zweiten Welle 8 z.B. über eine Innenverzahnung 9 drehfest aufgesteckt. Die zweite Welle 8 ist zum Schalten des Wellenschalters 1 in Axialrichtung verschiebbar, was in der Figur durch einen Doppelpfeil symbolisiert ist. Zwischen dem Innenring 7 und dem Außenring 2 sind kegelförmige Rollen 10 angeordnet, die beim Verschieben der zweiten Welle 8 in Richtung der ersten Welle 5, durch das damit verbundene Verschieben des Innenrings 7 gegen den Außenring 2, zwischen dem Innenring 7 und dem Außenring 2 eingeklemmt werden, um eine kraftschlüssige Drehmomentübertragung zwischen den Wellen 5,8 zu erreichen.

Der Außenring 2 hat eine zylinderförmige Grundform, wobei am Außenring 2 eine Innenverzahnung 15 vorgesehen ist, so dass jeweils eine der Rollen 10 in einem Zwischenraum zwischen jeweils zwei benachbarten Zähnen der Innenverzahnung 15 angeordnet ist. Die Anzahl der Rollen 10 entspricht also der Anzahl der Zähne der Innenverzahnung 15.

Der Innenring 7 hat eine in Axialrichtung sich konisch verjüngende radial äußere Oberfläche 17, die einen radial zumindest im Wesentlichen kreisförmigen Querschnitt aufweist. Die Rollen 10 sind derart zwischen Innenring 7 und Außenring 2 angeordnet, dass die Konizität der Rollen 10 und der Oberfläche 17 des Innenrings 7 in Axialrichtung entgegengesetzt verläuft. Zwischen der Symmetrieachse der Rollen 10 und der Axialrichtung der Wellen 5,8 ist daher ein spitzer Winkel ausgebildet.

In Figur 2 ist eine bevorzugte Ausführungsform des Außenrings 2 eines erfindungsgemäßen Wellenschalters in einem Ausschnitt gezeigt. Die Innenverzahnung 15 des Außenrings 2 ist dabei als Evolventenverzahnung ausgeführt. Durch die radial am Außenring symmetrisch verteilt angeordneten Schraublöcher 20 kann der Außenring 2 an der Stirnseite einer Welle drehfest montiert werden.

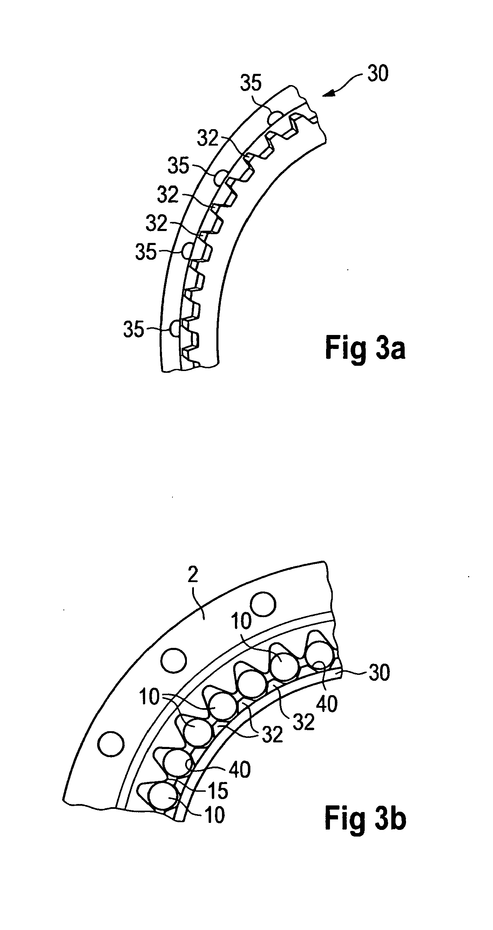

In Figur 3a ist ein Ausschnitt eines Deckrings 30 als Abstützmittel der Rollen eines erfindungsgemäßen Wellenschalters gezeigt. Der Deckring 30 ist dabei in einer Perspektive schräg zur Radialrichtung von innen dargestellt. Am Deckring sind in Axialrichtung vorstehende Zapfen 32 angeordnet, derart, dass jeweils zwei benachbarte Zapfen 32 jeweils eine der Rollen durch Ausbilden von zwei Auflagepunkten radial nach innen abstützen können. Der Deckring 30 ist zwischen dem Außenring und der Stirnseite der Welle, mit der der Außenring verschraubt wird, anzuordnen. Dazu weist der Deckring 30 Schraublöcher 35 auf, die entsprechend den Schraublöchern des Außenrings positioniert sind.

Die Zapfen 32 können in Radialrichtung von innen nach außen verjüngt, beispielsweise zumindest im Wesentlichen dreieckig ausgeführt sein, um eine an die äußere Kontur der Rollen angepasste Auflagefläche zur Verfügung zu stellen, wie mit Bezug auf die Figur 3b noch dargestellt wird.

In Figur 3b ist die Positionierung der Rollen 10 in Zwischenräumen der Zähne der Verzahnung 15 des Außenrings 2 gemäß Figur 2 mit einer Abstützung durch den Deckring 30 gemäß Figur 3a in einem Ausschnitt dargestellt. Jeweils eine Rolle 10 ist in einem Zwischenraum der Zähne der Innenverzahnung 15 des Außenrings 2 angeordnet. Die Anzahl der Zapfen 32 des Deckrings 30 entspricht der Anzahl der Zähne der Innenverzahnung 15 des Außenrings 2, so dass jede der Rollen 10 durch jeweils zwei benachbarte Zapfen 32 abgestützt ist. Die Zapfen 32 stehen dazu vom Deckring 30 axial Richtung Außenring 2 ab. Die Zapfen 32 weisen Flanken 40 auf, die seitlich abgeschrägt sind und auf denen die Rollen 10 aufliegen, so dass die Rollen 10 mit möglichst wenig Reibung auf diesen Flanken 40 frei drehen können.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Wellenschalter (1) zur drehfesten Verkoppelung zweier in axialer Richtung hintereinander angeordneter Wellen (5,8)
1.1 mit einem zumindest im Wesentlichen zylinderförmigen Außenring (2);
1.2 und einem Innenring (7) mit einer in Axialrichtung sich konisch verjüngenden radial äußeren Oberfläche (17), die einen radial zumindest im Wesentlichen kreisförmigen Querschnitt aufweist;
1.3 und kegelförmigen Rollen (10), wobei die Rollen (10) zwischen dem Innenring (7) und dem Außenring (2) derart angeordnet sind, dass die Konizität der Rollen (10) und der Oberfläche (17) des Innenrings (7) in Axialrichtung entgegengesetzt verläuft;
**dadurch gekennzeichnet, dass**
1.4 der Außenring (2) eine Innenverzahnung (15) aufweist, wobei die Rollen (10) bevorzugt einzeln zwischen jeweils zwei benachbarten Zähnen der Innenverzahnung (15) angeordnet sind, und entweder die Zähne der Innenverzahnung (15) des Außenrings (2) derart an die Kegelform der Rollen (10) angepasst ist, dass die Zähne in Axialrichtung eine zur Konizität der Rollen (10) entgegengesetzte Verjüngung aufweisen, oder
die Innenverzahnung (15) des Außenrings (2) als Evolventenverzahnung ausgeführt ist.

2. Wellenschalter gemäß Anspruch 1, **dadurch gekennzeichnet, dass**
der Außenring (2) eine Außenverzahnung aufweist.

3. Wellenschalter gemäß einem der vorhergehenden Ansprüche, **dadurch gekennzeichnet, dass**
Abstützmittel zur stirnseitigen und/oder radial inneren Abstützung der Rollen (10) vorgesehen sind.

4. Wellenschalter gemäß Anspruch 3,
**dadurch gekennzeichnet, dass**
die Abstützmittel, in Axialrichtung einseitig oder beidseitig am Außenring (2) angeordnet, einen Deckring (30) umfassen, wobei an dem Deckring (30) in Axialrichtung vorstehende Zapfen (32) angeordnet sind, derart, dass jeweils zwei benachbarte Zapfen (32) jeweils eine der Rollen (10) durch Ausbilden von zwei Auflagepunkten radial nach innen abstützen.

5. Wellenschalter gemäß Anspruch 4, **dadurch gekennzeichnet, dass**
der Deckring (30) zumindest teilweise aus Kunststoff gefertigt ist.

## Claims

1. A shaft switch (1) for torsion-proof coupling of two shafts (5, 8) which are arranged one after the other in the axial direction, comprising
1.1 a substantially cylindrical outer ring (2);
1.2 and an inner ring (7) with a radially outer surface (17) which tapers conically in the axial direction and which has a radially at least substantially circular cross section;
1.3 and conical rollers (10), with the rollers (10) being arranged between the inner ring (7) and the outer ring (2) in such a way that the conicity of the rollers (10) and the surface (17) of the inner ring (7) extends oppositely in the axial direction;
**characterized in that**
1.4 the outer ring (2) has an inner toothing (15), with the rollers (10) preferably being arranged individually between two respective adjacent teeth of the inner toothing (15), and either the teeth of the inner toothing (15) of the outer ring (2) are adjusted to the conical shape of the rollers (10) in such a way that the teeth have a tapering which in the axial direction is opposite to the conicity of the rollers, or the inner toothing (15) of the outer ring (2) is arranged as an involute toothing.

2. A shaft switch according to claim 1, **characterized in that** the outer ring (2) has an outer toothing.

3. A shaft switch according to one of the preceding claims, **characterized in that** support means are provided for the support of the rollers (10) on the face side and/or the radially inner side.

4. A shaft switch according to claim 3, **characterized in that** the support means which are arranged in the axial direction on one side or both sides on the outer ring (2) comprise a cover ring (30), with pins (32) being arranged on the cover ring (30) which protrude in the axial direction in such a way that two respectively adjacent pins (32) support one each of the rollers (10) radially to the inside by forming two bearing points.

5. A shaft switch according to claim 4, **characterized in that** the cover ring (30) is made at least partly of plastic.

## Revendications

1. Combinateur (1) pour le couplage solidaire en rotation de deux arbres (5, 8) disposés l'un derrière l'autre dans le sens axial
1.1 avec une bague extérieure (2) au moins sensiblement cylindrique ;
1.2 et avec une bague intérieure (7) avec une surface extérieure dans le sens radial (17) se resserrant en cône dans le sens axial, qui présente une section au moins sensiblement circulaire dans le sens radial ;
1.3 et avec des galets coniques (10), lesquels galets (10) sont disposés entre la bague intérieure (7) et la bague extérieure (2) de telle façon que la conicité des galets (10) et de la surface (17) de la bague intérieure (7) soit opposée dans le sens radial ;
**caractérisé en ce que**
1.4 la bague extérieure (2) possède une denture interne (15), les galets (10) étant disposés de préférence chacun entre deux dents voisines de la denture interne (15) et soit les dents de la denture interne (15) de la bague extérieure (2) étant adaptés à la forme conique des galets (10) de telle façon que les dents présentent dans le sens axial un resserrement opposé à la conicité des galets (10), soit la denture interne (15) de la bague extérieure (2) étant réalisée comme une denture à développante.

2. Combinateur selon la revendication 1, **caractérisé en ce que** la bague extérieure (2) présente une denture externe.

3. Combinateur selon l'une des revendications précédentes, **caractérisé en ce que** des moyens d'appui sont prévus pour l'appui des galets (10) sur la face d'extrémité et/ou du côté intérieur dans le sens radial.

4. Combinateur selon la revendication 3, **caractérisé en ce que** les moyens d'appui, disposés d'un côté ou des deux côtés de la bague extérieure (2) dans le sens axial, comprennent une bague de couverture (30), laquelle bague de couverture (30) porte des picots (32) dépassant dans le sens axial, de telle manière que chacun des galets (10) s'appuie entre deux picots (32) voisins par la formation de deux points d'appui dans le sens radial vers l'intérieur.

5. Combinateur selon la revendication 4, **caractérisé en ce que** la bague de couverture (30) est au moins partiellement faite de matière plastique.
